# EUROPÄISCHE PATENTSCHRIFT

(11) **EP 2 906 983 B1**
(45) Veröffentlichungstag und Bekanntmachung des Hinweises auf die Patenterteilung: **21.09.2022**
(21) Anmeldenummer: 13786412.0
(22) Anmeldetag: 09.10.2013
(51) Int. Cl.: G02B 7/182, F41H 13/00, G02B 26/10, G01S 17/02

(54) **LASERSTRAHLRICHTSYSTEM UND VERFAHREN ZUR AUSRICHTUNG VON OPTIKKOMPONENTEN DES LASERSTRAHLRICHTSYSTEMS**
LASER BEAM DIRECTING SYSTEM AND METHOD FOR ORIENTING OPTICAL COMPONENTS OF THE LASER BEAM DIRECTING SYSTEM
SYSTÈME D'ALIGNEMENT À FAISCEAU LASER ET PROCÉDÉ POUR L'ALIGNEMENT DE COMPOSANTS OPTIQUES DU SYSTÈME D'ALIGNEMENT À FAISCEAU LASER

(30) Priorität: 11.10.2012 DE 102012019940
(43) Veröffentlichungstag der Anmeldung: 19.08.2015
(73) Patentinhaber: MBDA Deutschland GmbH, 86529 Schrobenhausen (DE)
(72) Erfinder: PROTZ, Rudolf, 85635 Höhenkirchen-Siegertsbrunn (DE)
(74) Vertreter: Isarpatent
(86) Internationale Anmeldenummer: PCT/DE2013/000578
(87) Internationale Veröffentlichungsnummer: WO 2014/056476

(56) Entgegenhaltungen:
- JP-A- 2000 206 243
- JP-A- 2006 189 256
- JP-A- 2010 148 047

## Beschreibung

Die vorliegende Erfindung betrifft ein Laserstrahlrichtsystem und ein Verfahren zur Ausrichtung von Optikkomponenten des Laserstrahlrichtsystems.

Zum schnellen Richten eines Laserstrahls auf ein Ziel, welches sich im gesamten Halbraum bewegen kann, kann eine Teleskopoptik verwendet werden. Die Teleskopoptik kann den vom Laser kommenden Strahl aufweiten und fokussieren. Des Weiteren kann der Laserstrahl mittels einer Strahlrichteinheit dem Ziel nachgeführt werden. Solche Richteinheiten weisen in der Regel zwei Drehachsen auf, die in Azimut und Elevation bewegt werden.

Der Laserstrahl kann dabei innerhalb der Strahlrichteinheit durch mehrere Umlenkspiegel in einer sogenannten Coude-Strahlführung von einem ortsfesten Hauptlaser zur um die zwei Achsen bewegten Teleskopoptik gelenkt werden.

Um eine hochgenaue Ausrichtung des Laserstrahls mit einem derartigen System gewährleisten zu können, ist eine exakte Justierung der Umlenkspiegel im Coude-Optikkanal erforderlich.

Bei konventionellen Richtsystemen ist ein sehr starrer mechanischer Aufbau mit einer hohen Masse erforderlich, um auch bei bewegten Richtsystemen, also unter dynamischen Lasten, eine exakte Ausrichtung der Umlenkspiegel zu gewährleisten. Derartige Richtsysteme können somit träge sein. Ferner ist eine Justierung des Strahlenverlaufs im Betrieb nicht möglich.

In JP2000206243 wird ein Richtsystem zum Ausrichten eines Laserstrahls beschrieben.

Es kann daher ein Bedarf an einem Verbesserten Laserstrahlrichtsystem und einem entsprechenden Verfahren zum Ausrichten von Optikkomponenten des Laserstrahlrichtsystems bestehen, die es insbesondere ermöglichen eine schnelle und exakte Führung des Hauptlaserstrahls gegebenenfalls über längere Zeiträume zu gewährleisten.

Dieser Bedarf kann durch den Gegenstand der vorliegenden Erfindung gemäß den unabhängigen Ansprüchen gedeckt werden. Vorteilhafte Ausführungsformen der vorliegenden Erfindung sind in den abhängigen Ansprüchen beschrieben.

Im Folgenden werden Merkmale, Einzelheiten und mögliche Vorteile einer Vorrichtung gemäß Ausführungsformen der Erfindung im Detail diskutiert. Gemäß einem ersten Aspekt der Erfindung wird ein Laserstrahlrichtsystem vorgestellt, wobei ein solches erfindungsgemäßes Laserstrahlrichtsystem zum Richten eines Hauptlaserstrahls auf ein Ziel in Anspruch 1 definiert ist. Das Laserstrahlrichtsystem weist u.a. einen ersten Umlenkspiegel auf, der mit einer Elevationsachse des Laserstrahlrichtsystems verbunden ist. Ferner weist das Laserstrahlrichtsystem einen Hauptlaser auf, der über den ersten Umlenkspiegel in eine Teleskopoptik einkoppelbar ist. Des Weiteren weist das Laserstrahlrichtsystem einen ersten Hilfslaser und einen zweiten Hilfslaser auf.

Der erste Hilfslaser ist parallel zu einer Azimutdrehachse des Laserstrahlrichtsystems ausgerichtet. Der zweite Hilfslaser ist parallel zu einer Elevationsdrehachse des Laserstrahlrichtsystems ausgerichtet. Ferner weist das Laserstrahlrichtsystem einen ersten Detektor auf. Dabei sind der erste Hilfslaser, der zweite Hilfslaser und der erste Detektor derart im Laserstrahlrichtsystem angeordnet und ausgerichtet, dass durch Vergleich der auf dem ersten Detektor eintreffenden Strahlen des ersten Hilfslasers und des zweiten Hilfslasers, der erste Umlenkspiegel so ausrichtbar ist, dass ein Hauptlaserstrahl parallel zur Elevationsdrehachse in die Teleskopoptik einkoppelbar ist.

Anders ausgedrückt basiert die Idee der vorliegenden Erfindung darauf, zusätzlich zum Hauptlaser, zwei ortsfeste parallel zu den Drehachsen des Laserstrahlrichtsystems ausgerichtete Hilfslaser vorzusehen, die über Optikkomponenten des Laserstrahlrichtsystems zu einem ersten Detektor gelenkt werden. Am ersten Detektor werden die einfallenden Strahlen, insbesondere die Einfallswinkel, die Verkippungen und/oder Einfallspositionen, miteinander verglichen. Anschließend kann das Laserstrahlrichtsystem die Optikkomponenten, insbesondere Umlenkspiegel, derart nachjustieren, dass der erste Hilfslaserstrahl am ersten Detektor mit dem zweiten Hilfslaserstrahl zusammenfällt. Dass heißt, das Laserstrahlrichtsystem kann eine Differenzmessung durchführen um eine Abweichung von der Orthogonalität des Strahlenverlaufs festzustellen und die Optikkomponenten so nachzujustieren, dass die Orthogonalität wieder hergestellt ist.

Nach der Durchführung der Justierung mit Hilfe der Hilfslaser und des ersten Detektors, ist ein Verlauf des Hauptlaserstrahls parallel zu den Drehachsen des Systems sichergestellt. Dies ermöglicht eine hochgenaue Ausrichtung des Laserstrahls. Dank der erfindungsgemäßen Ausgestaltung des Laserstrahlrichtsystems kann die Justierung des ersten Umlenkspiegels mit einer Genauigkeit von etwa 1 bis 5 Mikrorad relativ zu den beiden Drehachsen des Laserstrahlrichtsystems erfolgen. Ferner ermöglichen die Hilfslaser und der erste Detektor eine permanente Nachjustierung der Ausrichtung des ersten Umlenkspiegels mit der erforderlichen Genauigkeit. Insbesondere können der erste Umlenkspiegel, sowie weitere Optikkomponenten des Laserstrahlrichtsystems auch bei Betrieb des Laserstrahlrichtsystems überprüft und bei Bedarf nachjustiert werden.

Das Laserstrahlrichtsystem kann z.B. für astronomische oder militärische Zwecke eingesetzt werden. Dabei ist das Laserstrahlrichtsystem als Zweiachsenrichtsystem mit einer Azimutdrehachse und einer Elevationsdrehachse ausgeführt.

Das Laserstrahlrichtsystem weist unterschiedliche Optikkomponenten zur Führung des Hauptlaserstrahls auf. Der erste Umlenkspiegel stellt eine derartige Optikkomponente dar. Ferner können mehrere weitere Umlenkspiegel im Laserstrahlrichtsystem vorgesehen sein. Der erste Umlenkspiegel wird dabei mit der Elevationsachse mitbewegt. Weitere Umlenkspiegel, wie z.B. ein zweiter Umlenkspiegel, ein dritter Umlenkspiegel und ein vierter Umlenkspiegel können z.B. in einer Azimutdrehgabel des Laserstrahlrichtsystems montiert sein. Weitere Optikkomponenten des Laserstrahlrichtsystems können z.B. Strahlteilerkomponenten oder planparallele Platten sein.

Über die Umlenkspiegel wird der Hauptlaserstrahl in eine Teleskopoptik eingekoppelt. Die Teleskopoptik ist ausgeführt den Hauptlaserstrahl aufzuweiten und zu fokussieren.

Die Hilfslaser sind ortsfest im Laserstrahlrichtsystem positioniert und sind jeweils parallel, d.h. kollinear, zur Azimut- und zur Elevationsachse des Laserstrahlrichtsystems ausgerichtet. Beispielsweise kann der zweite Hilfslaser fest in der Azimutdrehgabel montiert sein. Die Ausrichtung der Hilfslaser parallel zu den Drehachsen erfolgt dabei mit hoher Genauigkeit vor der Justierung der Optikkomponenten.

Der erste Detektor kann als Strahlrichtungssensor bzw. als Kamera ausgeführt sein. Insbesondere kann der Detektor als Hartmann-Shack-Sensor ausgeführt sein. Der erste Hilfslaser, der zweite Hilfslaser und der erste Detektor sind dabei derart im Laserstrahlrichtsystem angeordnet und ausgerichtet, dass der erste Hilfslaserstrahl und der zweite Hilfslaserstrahl auf den ersten Detektor treffen.

Einer der Hilfslaserstrahlen, z.B. der zweite Hilfslaserstrahl, wird dabei über den ersten Umlenkspiegel auf den Detektor gelenkt, so dass ein Vergleich der Einfallswinkel der Laserstrahlen, Informationen über eine Ausrichtung des ersten Umlenkspiegels liefert. Die auf dem Detektor eintreffenden Strahlen des ersten Hilfslasers und des zweiten Hilfslasers werden z.B. mit Hilfe einer Steuereinheit ausgewertet. Die Steuereinheit kann ferner z.B. einen Stellmotor ansteuern, der den ersten Umlenkspiegel derart verstellt, dass der erste Hilfslaserstrahl und der zweite Hilfslaserstrahl auf dem ersten Detektor zusammenfallen.

Sind die Optikkomponenten des Laserstrahlrichtsystems entsprechend ausgerichtet, so ist der Verlauf eines Hauptlaserstrahls zwischen den einzelnen Optikkomponenten parallel zu den Drehachsen ausgerichtet. Damit wird der Hauptlaserstrahl parallel zur Elevationsdrehachse in die Teleskopoptik eingekoppelt.

Gemäß der Erfindung weist der erste Umlenkspiegel eine dielektrische Beschichtung auf. Die dielektrische Beschichtung ist dabei derart ausgeführt, dass der erste Umlenkspiegel reflektierend, und insbesondere hochreflektierend, für den Hauptlaser und teilreflektierend für die Hilfslaser ist. Dabei kann der erste Umlenkspiegel einseitig oder beidseitig dielektrisch beschichtet sein. Je nach Einfallswinkel der Hilfslaserstrahlen werden diese, transmittiert oder reflektiert.

Auch weitere Optikkomponenten wie der zweite Umlenkspiegel, der dritte Umlenkspiegel und der vierte Umlenkspiegel können eine entsprechende dielektrische Beschichtung aufweisen. Bei einer bekannten Ausgestaltung des Laserstrahlrichtsystems ohne Hilfslaser und Detektoren können dagegen lediglich metalisch beschichtete Spiegel verwendet werden.

Gemäß einem weiteren Ausführungsbeispiel der Erfindung weist der Hauptlaser eine erste Wellenlänge auf. Der erste Hilfslaser weist eine zweite Wellenlänge und der zweite Hilfslaser eine dritte Wellenlänge auf. Die erste Wellenlänge unterscheidet sich dabei von der zweiten Wellenlänge und von der dritten Wellenlänge. D.h. der Hauptlaser wird mit einer anderen Wellenlänge als die Hilfslaser betrieben. Hierdurch kann eine Einstellung bzw. Justierung der Optikkomponenten des Laserstrahlrichtsystems auch während des Betriebes des Hauptlasers stattfinden.

Insbesondere können die zweite Wellenlänge und die dritte Wellenlänge gleich oder unterschiedlich sein. Der Hauptlaser kann z.B. mit einer Wellenlänge von 1070 nm betrieben werden. Der erste Hilfslaser kann z.B. mit einer Wellenlänge von 532 nm oder 635 nm betrieben werden. Ebenso kann der zweite Hilfslaser mit einer Wellenlänge von 532 nm oder 635 nm betrieben werden.

Gemäß der Erfindung ist mindestens ein Stellelement am ersten Umlenkspiegel vorgesehen. Das Stellelement ist ausgeführt, einen Neigungswinkel bzw. eine Ausrichtung des ersten Umlenkspeigels in der Azimutdrehachse und in der Elevationsdrehachse zu verstellen. D.h. mit Hilfe des Stellelements kann der erste Umlenkspiegel um die Azimutdrehachse und um die Elevationsdrehachse verkippt werden. Anders ausgedrückt, ist das Stellelement ausgeführt, den Umlenkspiegel um zwei Achsen in drei Dimensionen zu verstellen.

Das Stellelement kann z.B. von einer Steuereinheit angesteuert werden. Dabei kann das Stellelement z.B. ein Piezomotor oder ein magnetisches Verstellelement sein. Insbesondere können zwei Stellelemente am ersten Umlenkspiegel vorgesehen sein. Ein Stellelement kann den ersten Umlenkspielgel in Bezug auf die Azimutdrehachse und ein weiteres Stellelement in Bezug auf die Elevationsdrehachse verstellen. Ferner kann an jeder Optikkomponente des Laserstrahlrichtsystems ein separates Stellelement vorgesehen sein. Insbesondere können an den zweiten, dem dritten und dem vierten Umlenkspiegeln Stellelemente vorgesehen sein.

Gemäß einem weiteren Ausführungsbeispiel der Erfindung ist der erste Hilfslaser zeitgleich, d.h. parallel mit dem zweiten Hilfslaser oder zweitsequentiell zum zweiten Hilfslaser betreibbar. Haben z.B. beide Hilfslaser die gleiche Wellenlänge, so kann es sinnvoll sein, die Hilfslaser zeitsequentiell zu betreiben, um die Messergebnisse auf dem ersten Detektor dem jeweiligen Hilfslaser einfacher zuordnen zu können. Haben beide Hilfslaser jeweils unterschiedliche Wellenlängen, so können sie gleichzeitig betrieben werden, wodurch eine schnellere Justierung des ersten Umlenkspiegels ermöglicht wird.

Gemäß einem weiteren Ausführungsbeispiel der Erfindung weist das Laserstrahlrichtsystem ferner eine Steuereinheit auf. Die Steuereinheit ist dabei ausgeführt, einen ersten Einfallswinkel des ersten Hilfslasers bzw. Hilfslaserstrahls und einen zweiten Einfallswinkel des zweiten Hilfslasers bzw. Hilfslaserstrahls auf dem ersten Detektor zu ermitteln. Ferner ist die Steuereinheit ausgeführt, den ersten Umlenkspiegel derart mit Hilfe des Stellelements zu verstellen, dass der erste Einfallswinkel gleich dem zweiten Einfallswinkel ist. Zusätzlich oder alternativ kann die Steuereinheit die Detektionsstelle des ersten Hilfslasers auf dem ersten Detektor in Übereinstimmung mit der Detektionsstelle des zweiten Hilfslasers auf dem ersten Detektor bringen.

Gemäß der Erfindung weist das Laserstrahlrichtsystem eine erste Strahlteilerkomponente auf. Die erste Strahlteilerkomponente ist ausgeführt ist, einen ersten Teil des ersten Hilfslaserstrahls rechtwinklig auf den ersten Detektor auszukoppeln und einen zweiten Teil des ersten Hilfslaserstrahls durchzulassen. Ferner ist die erste Strahlteilerkomponente ausgeführt, einen ersten Teil des zweiten Hilfslaserstrahls rechtwinklig auf den ersten Detektor auszukoppeln.

Die Strahlteilerkomponente, auch als Strahlteilerwürfel bezeichnet, kann eine diagonale Spiegelfläche aufweisen und im direkten Strahlengang des ersten Hilfslasers angeordnet sein. Durch die diagonale Spiegelfläche können z.B. lediglich wenige Prozent des ersten Hilfslaserstrahls auf den ersten Detektor ausgekoppelt werden. Der zweite Hilfslaserstrahl kann über den ersten Umlenkspiegel zur ersten Strahlteilerkomponente gelenkt werden. An der diagonalen Spiegelfläche der Strahlteilerkomponente kann der zweite Hilfslaserstrahl bzw. ein Teil des zweiten Hilfslaserstrahls im 90° Winkel zum ersten Detektor gelenkt werden.

Des Weiteren kann das Laserstrahlrichtsystem einen zweiten Detektor und eine zweite Strahlteilerkomponente aufweisen. Die zweite Strahlteilerkomponente kann dabei ähnlich zur ersten Strahlteilerkomponente ausgeführt sein, und im direkten Strahlengang des zweiten Hilfslasers angeordnet sein. Dabei kann die zweite Strahlteilerkomponente einen ersten Teil des zweiten Hilfslaserstrahls rechtwinklig auf den zweiten Detektor auskoppeln und einen zweiten Teil des zweiten Hilfslaserstrahls durchlassen. Ferner kann die zweite Strahlteilerkomponente ausgeführt sein, einen ersten Teil des ersten Hilfslaserstrahls rechtwinklig auf den zweiten Detektor auszukoppeln. Hierdurch kann eine weitere Vergleichsmessung zur Überprüfung der Ausrichtung des ersten Umlenkspiegels durchgeführt werden.

Gemäß einem weiteren Ausführungsbeispiel der Erfindung weist das Laserstrahlrichtsystem ferner eine erste planparallele Platte auf. Die erste planparallele Platte ist ortsfest in der Azimutdrehachse des Laserstrahlrichtsystems angeordnet. Insbesondere kann die erste planparallele Platte fest mit der Azimutdrehgabel verbunden sein. Dabei ist die erste planparallele Platte teilreflektierend für den ersten Hilfslaser und für den zweiten Hilfslaser ausgeführt. D.h. die erste planparallele Platte reflektiert einen ersten Teil der Strahlung des ersten Hilfslasers und einen ersten Teil der Strahlung des zweiten Hilfslasers. Ferner ist eine Ausrichtung des ersten Hilfslasers parallel zur Azimutdrehachse des Laserstrahlrichtsystems mittels der ersten planparallelen Platte, der ersten Strahlteilerkomponente und des ersten Detektors justierbar.

Insbesondere ist die erste planparallele Platte derart ortsfest mit der Azimutdrehgabel verbunden, dass sie exakt senkrecht zur Azimutdrehachse steht. Der erste Hilfslaser wird senkrecht auf die erste planparallele Platte ausgerichtet. Die Ausrichtung kann durch die erste Strahlteilerkomponente und den ersten Detektor kontrolliert. Der Strahl des ersten Hilfslasers trifft auf die erste Strahlteilerkomponente, wobei ein erster Teil der Strahlung senkrecht zum ersten Detektor ausgekoppelt wird und ein zweiter Teil der Strahlung transmittiert wird. Der transmittierte Teil wird von der ersten planparallelen Platte in sich zurückgespiegelt und über die erste Strahlteilerkomponente ebenfalls auf den ersten Detektor ausgekoppelt. Mit Hilfe des ersten Detektors kann eine Verkippung der empfangenen Strahlen gegeneinander ermittelt werden. Anschließend kann der erste Hilfslaser derart justiert werden, dass die Verkippung der beiden Strahlen gleich ist.

Ferner kann eine zweite planparallele Platte im Laserstrahlrichtsystem vorgesehen sein. Die zweite planparallele Platte kann in der Elevationsache ortsfest angeordnet sein. Dabei kann die zweite planparallele Platte fest mit der Lagerung der Teleskopoptik verbunden sein. Ferner kann die zweite planparallele Platte exakt senkrecht zur Elevationsdrehachse ausgerichtet sein. Der zweite Hilfslaser wird senkrecht auf die zweite planparallele Platte ausgerichtet. Die Ausrichtung kann analog zur oben beschriebenen Vorgehensweise durch eine zweite Strahlteilerkomponente und einen zweiten Detektor kontrolliert werden.

Gemäß einem weiteren Ausführungsbeispiel der Erfindung weist das Laserstrahlrichtsystem ferner eine erste Blende auf. Die erste Blende ist ausgeführt, die erste planparallele Platte zu verschließen. Bei verschlossener erster Blende wird der erste Hilfslaserstrahl nicht zu den Umlenkspiegeln des Systems geleitet, so dass lediglich der zweite Hilfslaserstrahl z.B. von einem zweiten Detektor auswertbar ist. Dies kann z.B. bei der Justierung des zweiten, dritten und vierten Umlenkspiegels sinnvoll sein. Vor der zweiten planparallelen Platte kann eine zweite Blende vorgesehen sein. Diese kann eine Umlenkung des zweiten Hilfslaserstrahls über Umlenkspiegel verhindern.

Gemäß einem weiteren Ausführungsbeispiel der Erfindung weist das Laserstrahlrichtsystem ferner einen zweiten Detektor auf. Der zweite Detektor ist derart im Laserstrahlrichtsystem angeordnet, dass durch Vergleich der auf dem zweiten Detektor eintreffenden Strahlen des ersten Hilfslasers und des zweiten Hilfslasers, der erste Umlenkspiegel so ausrichtbar ist, dass ein Hauptlaserstrahl parallel zur Elevationsdrehachse in die Teleskopoptik einkoppelbar ist. Der zweite Detektor kann für eine Kontrolle der Messung mit erstem Detektor verwendet werden. Ferner kann durch eine Justierung des ersten Umlenkspiegels basierend sowohl auf den Messungen des ersten als auch des zweiten Detektors eine genauere Ausrichtung des ersten Umlenkspiegels erzielt werden.

Gemäß einem weiteren Ausführungsbeispiel der Erfindung weist das Laserstrahlrichtsystem ferner einen zweiten Umlenkspiegel, einen dritten Umlenkspiegel und einen vierten Umlenkspiegel auf. Der zweite Umlenkspiegel, der dritte Umlenkspiegel und der vierte Umlenkspiegel sind an einer Azimutdrehgabel des Laserstrahlrichtsystems montiert. Der erste Hilfslaser, der zweite Hilfslaser und der erste Detektor sind derart im Laserstrahlrichtsystem angeordnet, dass durch Vergleich der auf dem ersten Detektor eintreffenden Strahlen des ersten und zweiten Hilfslasers, der zweite Umlenkspiegel, der dritte Umlenkspiegel und der vierte Umlenkspiegel so ausrichtbar sind, dass ein Hauptlaserstrahl parallel zur Azimutdrehachse und parallel zur Elevationsdrehachse im Laserstrahlrichtsystem verläuft.

Die in Zusammenhang mit der Justierung des ersten Umlenkspiegels genannten Vorteile und Ausführungsmöglichkeiten gelten analog auch für die Justierung des zweiten, des dritten und des vierten Umlenkspiegel. Beispielsweise kann die Ausrichtung dieser Umlenkspiegel ebenfalls mit Hilfe eines zweiten Detektors kontrolliert bzw. überprüft werden.

Gemäß eines nicht beanspruchten Beispiels weist das Laserstrahlrichtsystem einen dritten Detektor auf. Ferner weist der erste Umlenkspiegel auf einer Rückseite ein Strahlteilerelement auf. Das Strahlteilerelement ist ausgeführt einen Teil der durch den ersten Umlenkspiegel transmittierten Strahlen des ersten und des zweiten Hilfslasers auf den dritten Detektor umzulenken. Die Umlenkung kann dabei z.B. in einem Winkel von 30° geschehen. Hierzu kann z.B. ein Beugungsgitter auf der Rückseite des ersten Umlenkspiegels integriert sein. Die am dritten Detektor ermittelten Werte bieten eine weitere Kontrollmöglichkeit für die Winkelstellung des ersten Umlenkspiegels. Gemäß einem zweiten Aspekt der Erfindung wird ein Verfahren zum Ausrichten von Optikkomponenten, insbesondere von Umlenkspiegeln, eines oben beschriebenen Laserstrahlrichtsystems vorgestellt, wobei ein solches erfindungsgemäßes Verfahren in Anspruch 10 definiert ist. Das Verfahren weist u.a. die folgenden Schritte auf: Betreiben eines ersten Hilfslasers, der parallel zu einer Azimutdrehachse des Laserstrahlrichtsystems ausgerichtet ist; Betreiben eines zweiten Hilfslasers, der parallel zu einer Elevationsdrehachse des Laserstrahlrichtsystems ausgerichtet ist; Ermitteln eines ersten Einfallswinkels des ersten Hilfslaserstrahls auf einem ersten Detektor; Ermitteln eines zweiten Einfallswinkels des zweiten Hilfslaserstrahls auf dem ersten Detektor; Justieren der Optikkomponenten des Laserstrahlrichtsystems derart, dass der erste Einfallswinkel dem zweiten Einfallswinkel entspricht.

Dabei kann beispielsweise der erste Umlenkspiegel so justiert werden, dass ein Hauptlaserstrahl parallel zur Elevationsdrehachse in die Teleskopoptik einkoppelbar ist.

Gemäß eines nicht beanspruchten Beispiels findet das Justieren bzw. Nachjustieren der Optikkomponenten dynamisch statt. D.h. die Optikkomponenten können z.B. während des Betriebs des Laserstrahlrichtsystems und insbesondere während des Betriebs des Hauptlasers ausgerichtet bzw. nachjustiert werden. Alternativ oder zusätzlich kann die Ausrichtung der Optikkomponenten statisch vor der Inbetriebnahme des Laserstrahlrichtsystems stattfinden.

Gemäß eines nicht beanspruchten Beispiels weist das Verfahren ferner das Ausrichten des ersten Hilfslasers parallel zur Azimutdrehachse des Laserstrahlrichtsystems und das Ausrichten des zweiten Hilfslasers parallel zur Elevationsdrehachse des Laserstrahlrichtsystems auf. Diese Schritte können vorzugsweise vor dem Justieren bzw. Ausrichten der Optikkomponenten des Laserstrahlrichtsystems stattfinden.

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.

Nachfolgend wird anhand der beigefügten Zeichnungen näher auf Ausführungsbeispiele der Erfindung eingegangen. Es zeigen:
- **Fig. 1**: einen schematischen Aufbau durch ein Laserstrahlrichtsystem gemäß einem Ausführungsbeispiel der Erfindung
- **Fig. 2**: einen Querschnitt durch ein Laserstrahlrichtsystems gemäß einem Ausführungsbeispiel der Erfindung
- **Fig. 3**: ein Flussdiagramm eines Verfahrens zum Ausrichten von Optikkomponenten eines Laserstrahlrichtsystems gemäß einem Ausführungsbeispiel der Erfindung

Alle Figuren sind lediglich schematische Darstellungen erfindungsgemäßer Vorrichtungen bzw. ihrer Bestandteile gemäß Ausführungsbeispielen der Erfindung. Insbesondere Abstände und Größenrelationen sind in den Figuren nicht maßstabsgetreu wiedergegeben. In den verschiedenen Figuren sind sich entsprechende Elemente mit den gleichen Referenznummern versehen.

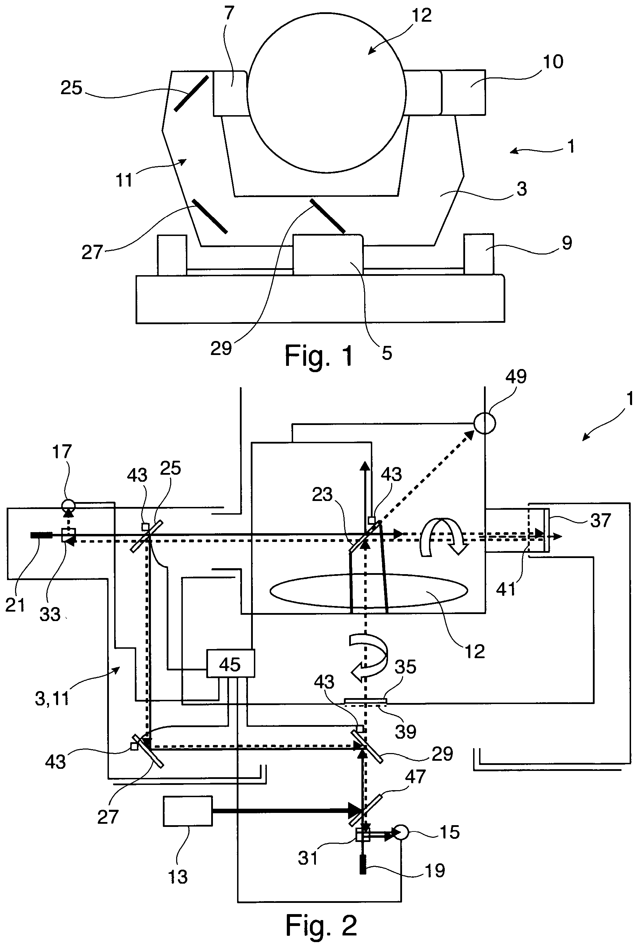

In Fig. 1 ist ein Laserstrahlrichtsystem 1 zum schnellen Richten eines Hauptlaserstrahls auf ein Ziel, welches sich im gesamten Halbraum bewegen kann dargestellt. Ein Hauptlaserstrahl wird über Spiegel, die in Fig. 1 nicht sichtbar sind in den Coude-Optikkanal 11 eingeleitet. Im Coude-Optikkanal 11 wird der Hauptlaserstrahl über einen vierten Umlenkspiegel 29, einen dritten Umlenkspiegel 27 und einen zweiten Umlenkspiegel 25 zu einer Teleskopoptik 12 geführt. Über einen ersten Umlenkspiegel 23, der in Fig. 1 nicht sichtbar ist, wird der Hauptlaserstrahl in die Teleskopoptik 12 eingekoppelt. In der Teleskopoptik 12 wird der Hauptlaserstrahl aufgeweitet und fokussiert.

Mit Hilfe des Laserstrahlrichtsystems 1 kann der Hauptlaserstrahl einem bewegten Ziel nachgeführt werden. Hierzu weist das Laserstrahlrichtsystem 1 eine Azimutdrehgabel 3 auf, die in einem Azimutachslager 5 gelagert ist und mit Hilfe eines Azimutmotors 9 um eine Azimutachse drehbar ist. Ferner weist das Laserstrahlrichtsystem 1 ein Elevationslager 7 auf, an dem die Teleskopoptik 12 mit Hilfe eines Elevationsmotors 10 um eine Elevationsachse drehbar ist.

Um eine hochpräzise Ausrichtung des Hauptlaserstrahls auf das Zielobjekt zu gewährleisten, ist eine exakte Justierung der Umlenkspiegel 23, 25, 27, 29 erforderlich. Insbesondere ist es von Vorteil, wenn der Hauptlaserstrahl parallel zu den Drehachsen des Laserstrahlrichtsystems 1 verläuft. Die hochpräzise Ausrichtung wird mit Hilfe der Ausgestaltung des Laserstrahlrichtsystems 1 mit Hilfslasern 19, 21 und Detektoren 15, 17 ermöglicht. Dies wird anhand von Fig. 2 detaillierter erläutert. Dabei ermöglicht die erfindungsgemäße Ausgestaltung des Laserstrahlrichtsystems 1 eine dynamische Nachjustierung der Umlenkspiegel 23, 25, 27, 29, so dass eine präzise Laserführung über längere Zeiträume auch bei bewegen Laserstrahlrichtsystemen 1, also unter dynamischen Lasten, gewährleistet ist. Dabei können die Umlenkspiegel 23, 25, 27, 29 mit einer Genauigkeit von wenigen Mikrorad relativ zu den beiden Drehachsen des Laserstrahlrichtsystems 1 ausgerichtet werden.

Fig. 2 einen Querschnitt durch eine sogenannte Altazimut-Stahlrichteinheit mit parallel zur Azimutachse gerichteter Achse der Teleskopoptik 12. Der Hauptlaserstrahl des Hauptlasers 13 wird über einen ortsfesten Spiegel 47 parallel zur Azimutachse in die Richteinheit bzw. in das Laserstrahlrichtsystem 1 eingekoppelt. Über die in der Azimutdrehgabel 3 bzw. im Coudé-Optikkanal 11 montierten Umlenkspiegel, nämlich den zweiten Umlenkspiegel 25, den dritten Umlenkspiegel 27 und den vierten Umlenkspiegel 29, wird der Hauptlaserstrahl innerhalb des Laserstrahlrichtsystems 1 parallel zur Elevationsachse über den mit der Elevationsachse mitbewegten ersten Umlenkspiegel 23 in die optische Achse der Teleskopoptik eingekoppelt.

Als Hilfsmittel für die Justierung der Umlenkspiegel 23, 25, 27, 29 werden ein erster Hilfslaser 19 und ein zweiter Hilfslaser 21 verwendet. Der Strahl des ersten Hilfslasers 19 ist kollinear zur Azimutdrehachse und der Strahl des zweiten Hilfslasers 21 kollinear zur Elevationsdrehachse in das Laserstrahlrichtsystem 1 eingestrahlt. Die Wellenlänge der Hilfslaser 19, 21 ist verschieden von der Wellenlänge der zu richtenden Hauptlasers 13. Z.B. kann die Wellenlänge des ersten Hilfslasers bei ca. 532 nm, die Wellenlänge des zweiten Hilfslasers bei 635 nm und die Wellenlänge des Hauptlasers bei 1070 nm liegen.

Die Optikkomponenten, insbesondere der erste Umlenkspiegel 23, der zweite Umlenkspiegel 25, der vierte Umlenkspiegel 29 und der ortsfeste Spiegel 47, können als planparallele Platten ausgeführt sein. Das Material der planparallelen Platten kann dabei transparent für die Wellenlänge der Hilfslaser 19, 21 sein. Die Vorderseiten dieser Spiegel, d.h. die Seiten der Spiegel, die dem Hauptlaserstrahl zugewandt sind, können so beschichtet sein, dass siehochreflektierend für die Hauptlaserstrahlung und partiell reflektierend für die Hilfslaserstrahlung sind. Der dritte Umlenkspiegel 27 kann metallbeschichtet sein.

In der Azimutdrehachse wird senkrecht zu dieser fest mit der Azimutdrehgabel 3 verbunden, eine erste planparallele Platte 35 angebracht. Das Material der ersten planparallelen Platte 35 ist transparent für die Wellenlängen der Hilfslaser 19, 21. Ferner ist die Oberfläche der ersten planparallelen Platte 35 teilreflektierend für die Hilfslaserstrahlung beschichtet. Vor der ersten planparallelen Platte 35, insbesondere zwischen dem ersten Hilfslaser 19 und der ersten planparallelen Platte 35, ist eine erste Blende 39 angeordnet. Die erste Blende 39 ist dabei ausgeführt, im geschlossenen Zustand sowohl eine Transmission als auch eine Reflexion des ersten Hilfslaserstrahls an der ersten planparallelen Platte 35 zu verhindern. Die erste Blende 39 kann wahlweise geöffnet und geschlossen werden.

In gleicher Weise wird in der Elevationsdrehachse senkrecht zu dieser und fest mit der Lagerung 7 der Teleskopoptik 12 verbunden eine zweite planparallele Platte 37 angebracht. Die zweite planparallele Platte 37 ist dabei als Planspiegel ausgeführt. Vor der zweiten planparallelen Platte 37 ist eine zweite Blende 41 angebracht. Die zweite Blende 41 ist ausgeführt, im geschlossenen Zustand eine Reflexion des ersten und des zweiten Hilfslaserstrahls an der zweiten planparallelen Platte 37 zu verhindern. Dabei kann die zweite Blende 41 wahlweise geöffnet oder geschlossen werden.

Der erste Hilfslaser 19 ist ortsfest montiert. Der zweite Hilfslaser 21 ist fest in der Azimutdrehgabel 3 montiert. Zunächst kann vor Inbetriebnahme des Hauptlasers 13 bzw. des Laserstrahlrichtsystems 1 die Ausrichtung der Hilfslaser 19, 21 parallel zu den Achsen überprüft und ggf. justiert werden.

Hierzu wird der erste Hilfslaser 19 in Transmission durch den ortsfesten Spiegel 47 und den vierten Umlenkspiegel 29 bei geöffneter erster Blende 39 auf die erste planparallele Platte 35 ausgerichtet. Zur Kontrolle der Ausrichtung wird eine nach dem ersten Hilfslaser 19 angebrachte erste Strahlteilerkomponente 31, die als Strahlteilerwürfel ausgeführt ist, und der erste Detektor 15 verwendet.

Die erste Strahlteilerkomponente 31 ist dabei so beschaffen, dass ihre diagonale Spiegelfläche wenige Prozent des Strahls des ersten Hilfslasers 15 rechtwinklig auf den ersten Detektor 15 auskoppelt. Der transmittierte Strahl des ersten Hilfslasers 19 wird von der ersten planparallelen Platte 35 in sich zurück gespiegelt und über die diagonale Spiegelfläche und eine verspiegelte Oberfläche der ersten Strahlteilerkomponente 31 ebenfalls auf den ersten Detektor 15 ausgekoppelt. Der erste Detektor 15 ist z.B. als Hartmann-Shack-Sensor ausgeführt. Dabei kann der erste Detektor 15 die Verkippungen der beiden empfangenen Strahlen ermitteln. Die Ausrichtung bzw. Winkeljustierung des ersten Hilfslasers 19 kann nun so erfolgen, dass die Verkippung der beiden am ersten Detektor 15 empfangenen Strahlen gleich ist.

Der zweite Hilfslaser 21 kann ähnlich wie der erste Hilfslaser 19 ausgerichtet werden. Der Strahl des zweiten Hilfslasers 21 wird in Transmission durch den zweiten Umlenkspiegel 25 und den ersten Umlenkspiegel 23 bei geöffneter zweiter Blende 41 senkrecht auf die zweite planparallele Platte 37 ausgerichtet. Zur Kontrolle der Ausrichtung wird eine nach dem zweiten Hilfslaser 21 in dessen Strahlgang angebrachte zweite Strahlteilerkomponente 33 und der zweite Detektor 17 verwendet.

Die zweite Strahlteilerkomponente 33 ist ähnlich zur ersten Strahlteilerkomponente 31 als Strahlteilerwürfel ausgeführt und so beschaffen, dass ihre diagonale Spiegelfläche wenige Prozent des Strahls des zweiten Hilfslasers 21 rechtwinklig auf den zweiten Detektor 17 auskoppelt. Der durch die zweite Strahlteilerkomponente 33 transmittierte Teil des zweiten Hilfslaserstrahls wird von der zweiten planparallelen Platte 37 in sich zurückgespiegelt und über eine diagonale Spiegelfläche und eine verspiegelte Oberfläche der zweiten Strahlteilerkomponente 33 ebenfalls auf den zweiten Detektor 17 ausgekoppelt. Der zweite Detektor 17 kann dabei z.B. ebenfalls als Hartmann-Shack-Sensor ausgeführt sein. Mit Hilfe des zweiten Detektors 17 können die Verkippungen der beiden empfangenen Strahlen ermittelt werden. Die Ausrichtung bzw. Winkeljustierung des zweiten Hilfslasers 21 kann nun so erfolgen, dass die Verkippung der beiden am zweiten Detektor 17 empfangenen Strahlen gleich ist.

Durch die hier beschriebene Justierung des ersten Hilfslasers 19 und des zweiten Hilfslasers 21 kann sichergestellt werden, dass der erste Hilfslaser 19 mit sehr hoher Genauigkeit parallel zur Azimutdrehachse und der zweite Hilfslaser 21 mit sehr hoher Genauigkeit parallel zur Elevationsdrehachse ausgerichtet sind. Mit Hilfe der so justierten Laserstrahlen der Hilfslaser 19, 21 kann anschließend die Justierung der Umlenkspiegel 23, 25, 27, 29 erfolgen.

Beispielsweise kann der erste Umlenkspiegel 23 mit Hilfe der Hilfslaser 19, 21 folgendermaßen justiert bzw. ausgerichtet werden: Der erste Umlenkspiegel 23 wird so verstellt, dass der über die zweite planparallele Platte 37 und den ersten Umlenkspiegel 23 reflektierte Strahl des zweiten Hilfslasers 21 auf den ersten Detektor 15 in gleichem Winkel auftrifft wie der über die erste Strahlteilerkomponente 31 ausgekoppelte Strahl des ersten Hilfslasers 19. Zur Kontrolle kann der erste Umlenkspiegel 23 zusätzlich gleichzeitig so ausgerichtet werden, dass der über den ersten Umlenkspiegel 23 und die zweite planparallele Platte 37 reflektierte Strahl des ersten Hilfslasers 19 auf den zweiten Detektor 17 in gleichem Winkel auftrifft wie der über die zweite Strahlleiterkomponente 33 ausgekoppelte Strahl des zweiten Hilfslasers 21.

Auch die weiteren Umlenkspiegel 25, 27, 29 können ähnlich zum ersten Umlenkspiegel 23 kontrolliert und justiert werden. Insbesondere können die Umlenkspiegel 25, 27, 29 iterativ so justiert werden, dass der über den vierten Spiegel 29, den dritten Umlenkspiegel 27, den zweiten Umlenkspiegel 25, die zweite planparallele Platte 37 und die zweite Strahlteilerkomponente 33 reflektierte Strahl des ersten Hilfslasers 19 mittig auf dem zweiten Detektor 17 auftrifft. Dabei werden die Umlenkspiegel 25, 27, 29 ferner iterativ so nachjustiert, dass der Strahl des ersten Hilfslasers 19 unter demselben Winkel auf den zweiten Detektor 17 auftrifft wie der über die zweite Strahlteilerkomponente 33 reflektierte Strahl des zweiten Hilfslasers 21.

Zur Kontrolle bzw. zur Verbesserung der Genauigkeit der Ausrichtung können die Umlenkspiegel 25, 27, 29 ferner so justiert werden, dass der über die zweite planparallele Platte 33, den zweiten Umlenkspiegel 25, den dritten Umlenkspiegel 27, den vierten Umlenkspiegel 29 und die erste Strahlteilerkomponente 31 reflektierte Strahl des zweiten Hilfslasers 21 mittig auf den ersten Detektor 15 auftrifft. Dabei werden die Umlenkspiegel 25, 27, 29 ferner iterativ so nachjustiert, dass der Strahl des zweiten Hilfslasers 21 unter demselben Winkel auf den ersten Detektor 15 auftrifft wie der über die erste Strahlteilerkomponente 31 reflektierte Strahl des ersten Hilfslasers 19.

Falls zur Unterscheidung der einzelnen Hilfslaser 19, 21 erforderlich, können die Hilfslaser 19, 21 zeitsequentiell ein- bzw. ausgeschaltet werden und die planparallelen Platten 35, 37 können mit den Blenden 39, 41 abgedeckt werden.

Die Justierung kann z.B. statisch vor der Inbetriebnahme des Hauptlasers 13 bzw. des Laserstrahlrichtsystems 1 erfolgen. Alternativ kann die Justierung während des Betriebs des Laserstrahlrichtsystems 1 und insbesondere des Hauptlasers 13 erfolgen. Hierbei können durch im Betrieb auftretende dynamische Kräfte verursachte Abweichungen der Justierung vermessen und korrigiert werden. Die optische Kompensation der Abweichungen kann durch motorische Stellelemente 43 erfolgen. Hierzu können an jedem Umlenkspiegel 23, 25, 27, 29 jeweils zwei Stellelemente 43 vorgesehen sein, die z.B. als Piezoelemente ausgeführt sind.

Die Stellelemente 43 können mit einer Steuereinheit 45 verbunden sein. Die Steuereinheit 45 kann ferner mit dem ersten Detektor 15 und mit dem zweiten Detektor 17 verbunden sein. Anhand der an den Detektoren 15, 17 ausgelesenen Daten kann die Steuereinheit 45 die Stellelemente 43 ansteuern und auf diese Weise die Umlenkspiegel 23, 25, 27, 29 nachjustieren.

Eine zusätzliche Kontrolle der Winkelstellung des ersten Umlenkspiegels 23 ist während des Betriebs des Laserstrahlrichtsystems 1 möglich, wenn auf der Rückseite des Umlenkspiegels 23 ein zusätzliches Strahlteilerelement vorgesehen ist, welches eine partielle Ablenkung der transmittierten Strahlen des ersten Hilfslasers 19 und/oder des zweiten Hilfslasers 21 unter einem schrägen Winkel von z.B. 30° bewirkt. Dies kann z.B. durch ein auf der Rückseite des ersten Umlenkspiegels 23 integriertes Beugungsgitter erzielt werden.

Der Winkel der auf diese Weise abgelenkten Strahlen des ersten Hilfslasers 19 und/oder des zweiten Hilfslasers 21 kann mittels eines in der Wandung der Teleskopoptik 12 vorgesehenen dritten Detektors 49 gemessen werden. In Verbindung mit den Messdaten des ersten Detektors15 und des zweiten Detektors 17 kann mit Hilfe der Stellelemente 43 an den Umlenkspiegeln 23, 25, 27, 29 eine geeignete Korrektur der Winkelablage durchgeführt werden.

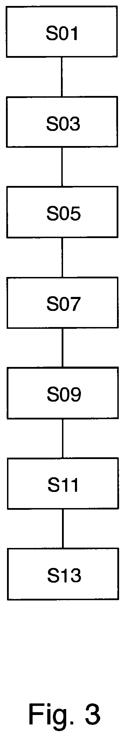

In Fig. 3 ist ein Flussdiagramm eines Ausführungsbeispiels des Verfahrens zum Ausrichten von Optikkomponenten, insbesondere von Umlenkspiegeln 23, 25, 27, 29, des Laserstrahlrichtsystems 1 dargestellt. Das Verfahren kann beliebig durch weitere Verfahrensschritte, die z.B. in Zusammenhang mit Fig. 2 erwähnt wurden ergänzt werden.

In einem ersten Schritt S01 wird der erste Hilfslaser 19 wie in Zusammenhang mit Fig. 2 erläutert parallel zur Azimutdrehachse des Laserstrahlrichtsystems 1 ausgerichtet. Ferner wird in Schritt S03 der zweite Hilfslaser 21 parallel zur Elevationsdrehachse des Laserstrahlrichtsystems 1 ausgerichtet. Anschließend werden die Hilfslaser 19, 21 parallel zu den Achsen in das Laserstrahlrichtsystem 1 eingestrahlt. Dies geschieht in den Schritten S05 und S07.

In Schritt S09 wird ein erster Einfallswinkel des ersten Hilfslaserstrahls auf einem ersten Detektor 15 ermittelt. In Schritt S11 wird ein zweiter Einfallswinkel des zweiten Hilfslaserstrahls auf dem ersten Detektor 15 ermittelt. Anschließend werden in Schritt S13 die Optikkomponenten 23, 25, 27, 29 wie z.B. der erste Umlenkspiegel 23 derart justiert, dass der erste Einfallswinkel dem zweiten Einfallswinkel entspricht.

Die Schritte des Verfahrens können dabei teilweise in alternativer Reihenfolge oder parallel zueinander ausgeführt werden. Beispielsweise können der erste Hilfslaser 19 und der zweite Hilfslaser 21 gleichzeitig betrieben werden. D.h. die Schritte S05 und S07 können parallel ausgeführt werden. Ferner können z.B. die Schritte S09 und S11 parallel oder sequentiell ausgeführt werden.

Es sei darauf hingewiesen, dass die Merkmale der Ausführungsbeispiele und Aspekte der Vorrichtung auch für Ausführungsformen des Verfahrens gelten und umgekehrt. Außerdem können auch diejenigen Merkmale frei miteinander kombiniert werden, bei denen dies nicht explizit erwähnt ist.

Abschließend wird angemerkt, dass Ausdrücke wie "aufweisend" oder ähnliche nicht ausschließen sollen, dass weitere Elemente oder Schritte vorgesehen sein können. Des Weiteren sei darauf hingewiesen, dass "eine" oder "ein" keine Vielzahl ausschließen. Außerdem können in Verbindung mit den verschiedenen Ausführungsformen beschriebene Merkmale beliebig miteinander kombiniert werden. Es wird ferner angemerkt, dass die Bezugszeichen in den Ansprüchen nicht als den Umfang der Ansprüche beschränkend ausgelegt werden sollen.

### Bezugszeichenliste

- 1: Laserstrahlrichtsystem
- 3: Azimutdrehgabel
- 5: Azimutachslager
- 7: Elevationsachslager
- 9: Azimutmotor
- 10: Elevationsmotor
- 11: Coudé-Optikkanal
- 12: Teleskopoptik
- 13: Hauptlaser
- 15: erster Detektor (D1)
- 17: zweiter Detektor (D2)
- 19: erster Hilfslaser (L1)
- 21: zweiter Hilfslaser (L2)
- 23: erster Umlenkspiegel (S4)
- 25: zweiter Umlenkspiegel (S3)
- 27: dritter Umlenkspiegel (S2)
- 29: vierter Umlenkspiegel (S1)
- 31: erste Strahlteilerkomponente (SW1)
- 33: zweite Strahlteilerkomponente (SW2)
- 35: erste planparallele Platte (PP1)
- 37: zweite planparallele Platte (PP2)
- 39: erste Blende (B1)
- 41: zweite Blende (B2)
- 43: Stellelement
- 45: Steuereinheit
- 47: orstfester Spiegel (S5)
- 49: dritter Detektor

- S01: Ausrichten des ersten Hilfslasers parallel zur Azimutdrehachse des Laserstrahlrichtsystems
- S03: Ausrichten des zweiten Hilfslasers parallel zur Elevationsdrehachse des Laserstrahlrichtsystems
- S05: Betreiben des ersten Hilfslasers
- S07: Betreiben des zweiten Hilfslasers
- S09: Ermitteln eines ersten Einfallswinkels des ersten Hilfslaserstrahls auf einem ersten Detektor
- S11: Ermitteln eines zweiten Einfallswinkels des zweiten Hilfslaserstrahls auf dem ersten Detektor
- S13: Justieren der Optikkomponenten des Laserstrahlrichtsystems derart, dass der erste Einfallswinkel dem zweiten Einfallswinkel entspricht

## Patentansprüche

1. Laserstrahlrichtsystem (1) zum Richten eines Hauptlaserstrahls auf ein Ziel, das Laserstrahlrichtsystem (1) aufweisend:
einen ersten Hilfslaser (19), der einen ersten Hilfslaserstrahl erzeugt und parallel zu einer Azimutdrehachse des Laserstrahlrichtsystems (1) ausgerichtet ist;
einen zweiten Hilfslaser (21), der einen zweiten Hilfslaserstrahl erzeugt und parallel zu einer Elevationsdrehachse des Laserstrahlrichtsystems (1) ausgerichtet ist;
einen ersten Umlenkspiegel (23), der mit der Elevationsdrehachse des Laserstrahlrichtsystems (1) verbunden ist, wobei ein Stellelement (43) an dem ersten Umlenkspiegel (23) dazu ausgebildet ist, einen Neigungswinkel des ersten Umlenkspiegels (23) in der Azimutdrehachse und in der Elevationsdrehachse zu verstellen;
einen den Hauptlaserstrahl erzeugenden Hauptlaser (13), wobei der erste Umlenkspiegel (23) dazu angeordnet und ausgebildet ist, den Hauptlaserstrahl von der Elevationsdrehachse kommend in eine Teleskopoptik (12) des Laserstrahlrichtsystems (1) einzukoppeln und den zweiten Hilfslaserstrahl des zweiten Hilfslasers (19) weiterzuleiten, wobei der erste Umlenkspiegel (23) eine dielektrische Beschichtung aufweist, welche derart ausgeführt ist, dass der erste Umlenkspiegel (23) reflektierend für den Hauptlaserstrahl und teilreflektierend für die Hilfslaser (19, 21) ist;
einen ersten Detektor (15);
eine erste Strahlteilerkomponente (31), wobei die erste Strahlteilerkomponente (31) angeordnet und ausgebildet ist, einen ersten Teil des ersten Hilfslaserstrahls rechtwinklig auf den ersten Detektor (15) auszukoppeln, einen zweiten Teil des ersten Hilfslaserstrahls zu dem ersten Umlenkspiegel (23) hin durchzulassen und einen ersten Teil des zweiten Hilfslaserstrahls von dem ersten Umlenkspiegel (23) kommend rechtwinklig auf den ersten Detektor (15) auszukoppeln;
wobei der erste Hilfslaser (19), der zweite Hilfslaser (21) und der erste Detektor (15) derart im Laserstrahlrichtsystem (1) angeordnet und ausgerichtet sind, dass durch Abgleich eines ersten Einfallswinkels der auf dem ersten Detektor (15) eintreffenden Strahlen des ersten Hilfslasers (19) mit einem zweiten Einfallswinkel der auf dem ersten Detektor (15) eintreffenden Strahlen des zweiten Hilfslasers (21), der erste Umlenkspiegel (23) über das Stellelement (43) derart ausrichtbar ist, dass der Hauptlaserstrahl parallel zu den Drehachsen in die Teleskopoptik (12) eingekoppelt wird.

2. Laserstrahlrichtsystem (1) gemäß Anspruch 1,
wobei der Hauptlaser (13) eine erste Wellenlänge aufweist;
wobei der erste Hilfslaser (19) eine zweite Wellenlänge aufweist;
wobei der zweite Hilfslaser (21) eine dritte Wellenlänge aufweist;
wobei die erste Wellenlänge sich von der zweiten Wellenlänge und von der dritten Wellenlänge unterscheidet.

3. Laserstrahlrichtsystem (1) gemäß Anspruch 1,
wobei das Stellelement (43) als Piezomotor ausgeführt ist.

4. Laserstrahlrichtsystem (1) gemäß einem der Ansprüche 1 bis 3,
wobei der erste Hilfslaser (19) zeitgleich mit dem zweiten Hilfslaser (21) oder zweitsequentiell zum zweiten Hilfslaser (21) betreibbar ist.

5. Laserstrahlrichtsystem (1) gemäß einem der Ansprüche 1 bis 4, ferner aufweisend
eine Steuereinheit (45);
wobei die Steuereinheit (45) ausgeführt ist, einen ersten Einfallswinkel des ersten Hilfslaserstrahls (19) und einen zweiten Einfallswinkel des zweiten Hilfslaserstrahls (21) auf dem ersten Detektor (15) zu ermitteln;
wobei die Steuereinheit (45) ausgeführt ist, den ersten Umlenkspiegel (23) derart zu verstellen, dass der erste Einfallswinkel gleich dem zweiten Einfallswinkel ist.

6. Laserstrahlrichtsystem (1) gemäß Anspruch 1, ferner aufweisend
eine erste planparallele Platte (35), die ortsfest in der Azimutdrehachse des Laserstrahlrichtsystems (1) angeordnet ist;
wobei die erste planparallele Platte (35) teilreflektierend für den ersten Hilfslaser (19) und für den zweiten Hilfslaser (21) ausgeführt ist;
wobei eine Ausrichtung des ersten Hilfslasers (19) parallel zur Azimutdrehachse des Laserstrahlrichtsystems (1) mittels der ersten planparallelen Platte (35), der ersten Strahlteilerkomponente (31) und des ersten Detektors (15) justierbar ist.

7. Laserstrahlrichtsystem (1) gemäß Anspruch 6, ferner aufweisend
eine erste Blende (39),
wobei die erste Blende (39) ausgeführt ist, die erste planparallele Platte (35) zu verschließen.

8. Laserstrahlrichtsystem (1) gemäß einem der Ansprüche 1 bis 7, ferner aufweisend
einen zweiten Detektor (17);
wobei der zweite Detektor (17) derart im Laserstrahlrichtsystem (1) angeordnet ist, dass durch Vergleich der auf dem zweiten Detektor (17) eintreffenden Strahlen des ersten und zweiten Hilfslasers (19, 21), der erste Umlenkspiegel (23) so ausrichtbar ist, dass ein Hauptlaserstrahl (13) parallel zur Elevationsdrehachse in die Teleskopoptik (12) einkoppelbar ist.

9. Laserstrahlrichtsystem (1) gemäß einem der Ansprüche 1 bis 8,
einen zweiten Umlenkspiegel (25), einen dritten Umlenkspiegel (27) und einen vierten Umlenkspiegel (29);
wobei der zweite Umlenkspiegel (25), der dritte Umlenkspiegel (27) und der vierte Umlenkspiegel (29) an einer Azimutdrehgabel (3) des Laserstrahlrichtsystems (1) montiert sind;
wobei der erste Hilfslaser (19), der zweite Hilfslaser (21) und der erste Detektor (15) derart im Laserstrahlrichtsystem (1) angeordnet sind, dass durch Vergleich der auf dem ersten Detektor (15) eintreffenden Strahlen des ersten und zweiten Hilfslasers (19, 21), der zweite Umlenkspiegel (25), der dritte Umlenkspiegel (27) und der vierte Umlenkspiegel (29) so ausrichtbar sind, dass ein Hauptlaserstrahl (13) parallel zur Azimutdrehachse und parallel zur Elevationsdrehachse im Laserstrahlrichtsystem (1) verläuft.

10. Verfahren zum Ausrichten von Optikkomponenten (23, 25, 27, 29) eines Laserstrahlrichtsystems (1) zum Richten eines Hauptlaserstrahls auf ein Ziel gemäß einem der Ansprüche 1 bis 9, wobei die Optikkomponenten (23, 25, 27, 29) zumindest den ersten Umlenkspiegel (23) umfassen, wobei das Verfahren die folgenden Schritte aufweist:
Betreiben (S05) des ersten Hilfslasers (19), der parallel zu einer Azimutdrehachse des Laserstrahlrichtsystems (1) ausgerichtet ist; Betreiben (S07) des zweiten Hilfslasers (21), der parallel zu einer Elevationsdrehachse des Laserstrahlrichtsystems (1) ausgerichtet ist;
Ermitteln (S09) eines ersten Einfallswinkels des ersten Hilfslaserstrahls (19) auf dem ersten Detektor (15);
Ermitteln (S11) eines zweiten Einfallswinkels des zweiten Hilfslaserstrahls (21) auf dem ersten Detektor (15);
Ausrichten (S13) der Optikkomponenten (23, 25, 27, 29) des Laserstrahlrichtsystems (1) derart, dass der erste Einfallswinkel dem zweiten Einfallswinkel entspricht.

## Claims

1. Laser beam directing system (1) for directing a main laser beam to a target, the laser beam directing system (1) comprising:
a first auxiliary laser (19) that generates a first auxiliary laser beam and is oriented parallel to an azimuth axis of rotation of the laser beam directing system (1);
a second auxiliary laser (21) that generates a second auxiliary laser beam and is oriented parallel to an elevation axis of rotation of the laser beam directing system (1);
a first deflecting mirror (23) that is connected to the elevation axis of rotation of the laser beam directing system (1), wherein an adjusting element (43) is embodied on the first deflecting mirror (23) so as to adjust an angle of inclination of the first deflecting mirror (23) in the azimuth axis of rotation and in the elevation axis of rotation;
a main laser (13) that generates the main laser beam, wherein the first deflecting mirror (23) is arranged and embodied so as to couple the main laser beam coming from the elevation axis of rotation into a telescope optics (12) of the laser beam directing system (1) and to further relay the second auxiliary laser beam of the second auxiliary laser (19), wherein the first deflecting mirror (23) comprises a dielectric coating that is embodied in such a manner that the first deflecting mirror (23) is reflective for the main laser beam and partially reflective for the auxiliary laser (19, 21);
a first detector (15);
a first beam splitter component (31), wherein the first beam splitter component (31) is arranged and embodied so as to decouple a first part of the first auxiliary laser beam at a right angle to the first detector (15), to allow a second part of the first auxiliary laser beam to pass through to the first deflecting mirror (23) and to decouple a first part of the second auxiliary laser beam coming from the first deflecting mirror (23) at a right angle to the first detector (15);
wherein the first auxiliary laser (19), the second auxiliary laser (21) and the first detector (15) are arranged and oriented in the laser beam directing system (1) in such a manner that by means of comparing a first angle of incidence of the beams of the first auxiliary laser (19) incident upon the first detector (15), with a second angle of incidence of the beams of the second auxiliary laser (21) incident upon the first detector (15), the first deflecting mirror (23) can be oriented via the adjusting element (43) in such a manner that the main laser beam is coupled parallel to the axis of rotation into the telescope optics (12).

2. Laser beam directing system (1) in accordance with claim 1,
wherein the main laser (13) comprises a first wavelength;
wherein the first auxiliary laser (19) comprises a second wavelength;
wherein the second auxiliary laser (21) comprises a third wavelength;
wherein the first wavelength differs from the second wavelength and from the third wavelength.

3. Laser beam directing system (1) in accordance with claim 1,
wherein the adjusting element (43) is embodied as a piezoelectric motor.

4. Laser beam directing system (1) in accordance with one of claims 1 to 3,
wherein the first auxiliary laser (19) can be operated simultaneously with the second auxiliary laser (21) or in a time-sequential manner with respect to the second auxiliary laser (21).

5. Laser beam directing system (1) in accordance with one of claims 1 to 4, moreover comprising
a control unit (45);
wherein the control unit (45) is embodied so as to determine a first angle of incidence of the first auxiliary laser beam (19) and a second angle of incidence of the second auxiliary laser beam (21) on the first detector (15); wherein the control unit (45) is embodied so as to adjust the first deflecting mirror (23) in such a manner that the first angle of incidence is identical to the second angle of incidence.

6. Laser beam directing system (1) in accordance with claim 1, moreover comprising
a first plane parallel plate (35) that is arranged in a fixed manner in the azimuth axis of rotation of the laser beam directing system (1);
wherein the first plane parallel plate (35) is embodied as partially reflective for the first auxiliary laser (19) and for the second auxiliary laser (21);
wherein an orientation of the first auxiliary laser (19) can be adjusted parallel to the azimuth axis of rotation of the laser beam directing system (1) by means of the first plane parallel plate (35), the first beam splitter component (31) and the first detector (15).

7. Laser beam directing system (1) in accordance with claim 6, moreover comprising
a first aperture (39),
wherein the first aperture (39) is embodied so as to close the first plane parallel plate (35).

8. Laser beam directing system (1) in accordance with one of claims 1 to 7, moreover comprising
a second detector (17);
wherein the second detector (17) is arranged in the laser beam directing system (1) in such a manner that by means of comparing the beams of the first and second auxiliary laser (19, 21) incident upon the second detector (17), the first deflecting mirror (23) can be oriented so that a main laser beam (13) can be coupled parallel to the elevation axis of rotation into the telescopic optics (12).

9. Laser beam directing system (1) in accordance with one of claims 1 to 8,
a second deflecting mirror (25), a third deflecting mirror (27) and a fourth deflecting mirror (29);
wherein the second deflecting mirror (25), the third deflecting mirror (27) and the fourth deflecting mirror (29) are mounted on an azimuth rotation yoke (3) of the laser beam directing system (1);
wherein the first auxiliary laser (19), the second auxiliary laser (21) and the first detector (15) are arranged in the laser beam directing system (1) in such a manner that by means of comparing the beams of the first and second auxiliary laser (19, 21) incident upon the first detector (15), the second deflecting mirror (25), the third deflecting mirror (27) and the fourth deflecting mirror (29) can be oriented so that a main laser beam (13) extends parallel to the azimuth axis of rotation and parallel to the elevation axis of rotation in the laser beam directing system (1).

10. Method for orienting optical components (23, 25, 27, 29) of a laser beam directing system (1) for directing a main laser beam to a target in accordance with one of claims 1 to 9, wherein the optical components (23, 25, 27, 29) comprise at least the first deflecting mirror (23), wherein the method comprises the following steps:
operating (S05) the first auxiliary laser (19) that is oriented parallel to an azimuth axis of rotation of the laser beam directing system (1);
operating (S07) the second auxiliary laser (21) that is oriented parallel to an elevation axis of rotation of the laser beam directing system (1);
determining (S09) a first angle of incidence of the first auxiliary laser beam (19) on the first detector (15);
determining (S11) a second angle of incidence of the second auxiliary laser beam (21) on the first detector (15);
orienting (S13) the optical components (23, 25, 27, 29) of the laser beam directing system (1) in such a manner that the first angle of incidence corresponds to the second angle of incidence.

## Revendications

1. Système de pointage de faisceau laser (1) pour pointer un faisceau laser principal sur une cible, le système de pointage de faisceau laser (1) présentant :
un premier laser auxiliaire (19) qui génère un premier faisceau laser auxiliaire et qui est orienté parallèlement à un axe de rotation en azimut du système de pointage de faisceau laser (1) ;
un deuxième laser auxiliaire (21) qui génère un deuxième faisceau laser auxiliaire et qui est orienté parallèlement à un axe de rotation en élévation du système de pointage de faisceau laser (1) ;
un premier miroir de renvoi (23) qui est relié à l'axe de rotation en élévation du système de pointage de faisceau laser (1), dans lequel un élément de réglage (43) sur le premier miroir de renvoi (23) est conçu pour régler un angle d'inclinaison du premier miroir de renvoi (23) sur l'axe de rotation en azimut et sur l'axe de rotation en élévation ;
un laser principal (13) générant le faisceau laser principal, dans lequel le premier miroir de renvoi (23) est disposé et conçu pour coupler le faisceau laser principal provenant de l'axe de rotation en élévation dans une optique télescopique (12) du système de pointage de faisceau laser (1) et pour transmettre le deuxième faisceau laser auxiliaire du deuxième laser auxiliaire (19), dans lequel le premier miroir de renvoi (23) présente un revêtement diélectrique qui est réalisé de telle sorte que le premier miroir de renvoi (23) est réfléchissant pour le faisceau laser principal et partiellement réfléchissant pour les lasers auxiliaires (19, 21) ;
un premier détecteur (15) ;
un premier composant diviseur de faisceau (31), dans lequel le premier composant diviseur de faisceau (31) est disposé et conçu pour découpler une première partie du premier faisceau laser auxiliaire à angle droit sur le premier détecteur (15), pour laisser passer une deuxième partie du premier faisceau laser auxiliaire vers le premier miroir de renvoi (23) et pour découpler une première partie du deuxième faisceau laser auxiliaire provenant du premier miroir de renvoi (23) à angle droit sur le premier détecteur (15) ;
dans lequel le premier laser auxiliaire (19), le deuxième laser auxiliaire (21) et le premier détecteur (15) sont disposés et orientés dans le système de pointage de faisceau laser (1) de telle sorte que, par égalisation d'un premier angle d'incidence du faisceau du premier laser auxiliaire (19) arrivant sur le premier détecteur (15) avec un deuxième angle d'incidence du faisceau du deuxième laser auxiliaire (21) arrivant sur le premier détecteur (15), le premier miroir de renvoi (23) peut être orienté par l'élément de réglage (43) de telle sorte que le faisceau laser principal soit couplé dans l'optique télescopique (12) parallèlement aux axes de rotation.

2. Système de pointage de faisceau laser (1) selon la revendication 1,
dans lequel le laser principal (13) présente une première longueur d'onde ;
dans lequel le premier laser auxiliaire (19) présente une deuxième longueur d'onde ;
dans lequel le deuxième laser auxiliaire (21) présente une troisième longueur d'onde ;
dans lequel la première longueur d'onde est différente de la deuxième longueur d'onde et de la troisième longueur d'onde.

3. Système de pointage de faisceau laser (1) selon la revendication 1,
dans lequel l'élément de réglage (43) est réalisé sous la forme d'un moteur piézoélectrique.

4. Système de pointage de faisceau laser (1) selon l'une des revendications 1 à 3,
dans lequel le premier laser auxiliaire (19) peut fonctionner en même temps que le deuxième laser auxiliaire (21) ou séquentiellement dans le temps par rapport au deuxième laser auxiliaire (21).

5. Système de pointage de faisceau laser (1) selon l'une des revendications 1 à 4, présentant en outre :
une unité de commande (45) ;
dans lequel l'unité de commande (45) est réalisée pour déterminer un premier angle d'incidence du premier faisceau laser auxiliaire (19) et un deuxième angle d'incidence du deuxième faisceau laser auxiliaire (21) sur le premier détecteur (15) ;
dans lequel l'unité de commande (45) est réalisée pour régler le premier miroir de renvoi (23) de telle sorte que le premier angle d'incidence soit égal au deuxième angle d'incidence.

6. Système de pointage de faisceau laser (1) selon la revendication 1, présentant en outre :
une première plaque à faces planes parallèles (35) qui est disposée de manière fixe sur l'axe de rotation en azimut du système de pointage de faisceau laser (1) ;
dans lequel la première plaque à faces planes parallèles (35) est réalisée partiellement réfléchissante pour le premier laser auxiliaire (19) et pour le deuxième laser auxiliaire (21) ;
dans lequel une orientation du premier laser auxiliaire (19) parallèlement à l'axe de rotation en azimut du système de pointage de faisceau laser (1) peut être ajustée au moyen de la première plaque à faces planes parallèles (35), du premier composant diviseur de faisceau (31) et du premier détecteur (15).

7. Système de pointage de faisceau laser (1) selon la revendication 6, présentant en outre :
un premier diaphragme (39),
dans lequel le premier diaphragme (39) est réalisé pour obturer la première plaque à faces planes parallèles (35).

8. Système de pointage de faisceau laser (1) selon l'une des revendications 1 à 7, présentant en outre :
un deuxième détecteur (17) ;
dans lequel le deuxième détecteur (17) est disposé dans le système de pointage de faisceau laser (1) de telle sorte que, par comparaison des faisceaux du premier et du deuxième laser auxiliaire (19, 21) arrivant sur le deuxième détecteur (17), le premier miroir de renvoi (23) peut être orienté de telle sorte qu'un faisceau laser principal (13) puisse être couplé dans l'optique du télescope (12) parallèlement à l'axe de rotation en élévation.

9. Système de pointage de faisceau laser (1) selon l'une des revendications 1 à 8 :
un deuxième miroir de renvoi (25), un troisième miroir de renvoi (27) et un quatrième miroir de renvoi (29) ;
dans lequel le deuxième miroir de renvoi (25), le troisième miroir de renvoi (27) et le quatrième miroir de renvoi (29) sont montés sur une fourche de rotation azimutale (3) du système de pointage de faisceau laser (1) ;
dans lequel le premier laser auxiliaire (19), le deuxième laser auxiliaire (21) et le premier détecteur (15) sont disposés dans le système de pointage de faisceau laser (1) de telle sorte que, par comparaison des faisceaux du premier et du deuxième laser auxiliaire (19, 21) arrivant sur le premier détecteur (15), le deuxième miroir de renvoi (25), le troisième miroir de renvoi (27) et le quatrième miroir de renvoi (29) peuvent être orientés de telle sorte qu'un faisceau laser principal (13) se propage parallèlement à l'axe de rotation en azimut et parallèlement à l'axe de rotation en élévation dans le système de pointage de faisceau laser (1).

10. Procédé pour orienter des composants optiques (23, 25, 27, 29) d'un système de pointage de faisceau laser (1) pour pointer un faisceau laser principal sur une cible selon l'une des revendications 1 à 9, dans lequel les composants optiques (23, 25, 27, 29) comprennent au moins le premier miroir de renvoi (23), le procédé comprenant les étapes consistant à :
faire fonctionner (S05) le premier laser auxiliaire (19) qui est orienté parallèlement à un axe de rotation en azimut du système de pointage de faisceau laser (1) ;
faire fonctionner (S07) le deuxième laser auxiliaire (21) qui est orienté parallèlement à un axe de rotation en élévation du système de pointage de faisceau laser (1) ;
déterminer (S09) un premier angle d'incidence du premier faisceau laser auxiliaire (19) sur le premier détecteur (15) ;
déterminer (S11) un deuxième angle d'incidence du deuxième faisceau laser auxiliaire (21) sur le premier détecteur (15) ;
orienter (S13) les composants optiques (23, 25, 27, 29) du système de pointage de faisceau laser (1) de telle sorte que le premier angle d'incidence corresponde au deuxième angle d'incidence.
